Europäisches Patentamt

European Patent Office

Office européen des brevets

(19)

(11) Veröffentlichungsnummer : **0 331 894 B1**

(12) # EUROPÄISCHE PATENTSCHRIFT

(45) Veröffentlichungstag der Patentschrift :
**08.07.92 Patentblatt 92/28**

(21) Anmeldenummer : **89101486.2**

(22) Anmeldetag : **28.01.89**

(51) Int. Cl.⁵ : **G01B 7/28,** G01B 5/20

(54) **Prüfeinrichtung.**

(30) Priorität : **08.03.88 DE 3807488**

(43) Veröffentlichungstag der Anmeldung :
**13.09.89 Patentblatt 89/37**

(45) Bekanntmachung des Hinweises auf die
Patenterteilung :
**08.07.92 Patentblatt 92/28**

(84) Benannte Vertragsstaaten :
**DE ES FR GB IT SE**

(56) Entgegenhaltungen :
**EP-A- 0 133 879**
**DE-A- 2 360 148**

(56) Entgegenhaltungen :
**US-A- 4 017 978**
**US-A- 4 477 978**
**Technisches Messen tm, 52. Jahrgang, Heft**
**12/1985, S. 465-470; G+h, Gördern und heben**
**27 (1977). Nr. 4, Fachteil mht, S.22-27**

(73) Patentinhaber : **ROBERT BOSCH GMBH**
**Postfach 30 02 20**
**W-7000 Stuttgart 30 (DE)**

(72) Erfinder : **Dobler, Klaus, Dr. Dipl.-Ing.**
**Bettäckerstrasse 12**
**W-7016 Gerlingen (DE)**
Erfinder : **Hachtel, Hansjörg, Dipl.-Ing.**
**Buchenstrasse 4**
**W-7251 Weissach (DE)**

## Beschreibung

### Stand der Technik

Die Erfindung betrifft eine Prüfeinrichtung gemäß dem Oberbegriff des Anspruchs 1. Eine solche Prüfeinrichtung ist aus der Druckschrift "Technisches Messen tm, 52. Jahrgang, Heft 12/1985, Seiten 465 - 470" bekannt, bei der mit Hilfe einer mechanischen und/oder sensorischen, berührungsfreien Abtastung die Kontur eines Bauteils bestimmt wird. Wenn aber ein falsches oder stark fehlerhaftes Bauteil vorliegt, kann es leicht zu Beschädigungen der Abtastsensoren oder des zu prüfenden Bauteils kommen, wenn der Vorschub der Prüfeinrichtung nicht rechtzeitig gestoppt wird.

In der Druckschrift "f + h - fördern und heben 27 (1977) Nr. 4, Fachteil mht, Seiten 22 - 27" wird eine Fügevorrichtung beschrieben, bei der der auftretende Kippwinkel eines Bolzens möglichst berührungslos erfaßt werden soll. Mit Hilfe zweier induktiver Aufnehmer wird hier die Kippung einer Platte ermittelt. Um den Fügevorgang optimal steuern zu können, wird mit Hilfe einer Druckmeßdose der Anpreßdruck bzw. die eingeleitete Kraft der Vorschubeinrichtung zusätzlich gemessen. Mit Hilfe des durch die Druckmeßdose bestimmten Drucks wird der Fügevorgang genau gesteuert, aber keine Prüf- oder Schutzeinrichtung ausgelöst.

In der DE-A 23 60 148 wird eine Vorrichtung zur Messung von Oberflächenprofilen, insbesondere der Arbeitsfläche einer Läppscheibe gelehrt. Hierbei sind an einem als Bezugspunkt dienenden Flachstab mehrere Sensoren angeordnet, die zur Messung der Abweichung des Abstands zwischen dem Bezugspunkt und der Läppscheibe dienen. Mit dieser Vorrichtung ist es nur möglich, die Unebenheit der Arbeitsfläche der Läppscheibe infolge des Verschleißes dieser Arbeitsfläche im Laufe des Läppvorgangs zu überwachen. Eine Abschaltung des Läppvorgangs bei einer zu starken Abweichung ist nicht vorgesehen.

Aus der EP-A 0 133 879 ist eine Vorrichtung bekannt, die eine Feststellung von aus der Oberfläche von Werkstücken herausragenden Partikeln und anschließend eine Aussortierung solcher fehlerhafter Werkstücke ermöglicht. Diese Meßeinrichtung weist einen Haltekopf für eine Sensorplatte auf. Im Haltekopf sind mehrere Sensoren angeordnet, die den Abstand zwischen der Unterseite des Haltekopfs und der Oberseite der Sensorplatte bestimmen. Liegt auf einer Grundplatte ein zu überwachendes Werkstück auf und ragt aus diesem Werkstück ein Partikel heraus, so geben die in der Sensorplatte angeordneten Sensoren kein einheitliches Meßsignal mehr ab. Die Meßvorrichtung schaltet zwar bei einem fehlerhaften Teil ab, dies geschieht aber nur bei fehlerhaften Werkstücken und nicht um eine Beschädigung der Meßsensoren zu verhindern.

Ferner ist es aber auch üblich, bei Fertigungs- und Montageeinrichtungen an bestimmten Stationen die ausgeführten Prüfvorgänge mit Hilfe von Videokameras zu überwachen. Dies ist insbesondere bei komplizierten Bauteilen der Fall. Diese Überwachung ist aber kostenintensiv.

Der Erfindung liegt die Aufgabe zugrunde, eine Prüfeinrichtung zur Überwachung der Form von Bauteilen dahingehend zu verbessern, daß eine Beschädigung der Meßsensoren oder des zu untersuchenden Bauteils weitgehend verhindert wird. Ferner soll bereits eine Vorauswahl falscher Bauteile möglich sein.

Diese Aufgabe wird durch die im Anspruch 1 gekennzeichneten Merkmale gelöst.

### Vorteile der Erfindung

Die erfindungsgemäße Prüfeinrichtung mit den kennzeichnenden Merkmalen des Hauptanspruchs hat demgegenüber den Vorteil, daß selbst komplexe Bauteile kostengünstig überprüft werden können. Eine Beschädigung der Meßsensoren oder des zu untersuchenden Bauteils kann weitgehend ausgeschlossen werden. Mit Hilfe der zusätzlichen Prüfeinrichtung können falsche Bauteile bereits in einer Vorauswahl erkannt und aussortiert werden. Ferner wird die genaue Position des Bauteils in der Prüfeinrichtung kontrolliert und gegebenenfalls die Prüfeinrichtung rechtzeitig abgeschaltet und eine Störmeldung abgegeben.

Durch die in den abhängigen Ansprüchen aufgeführten Maßnahmen sind vorteilhafte Weiterbildungen der im Anspruch 1 angegebenen Prüfeinrichtung möglich.

### Zeichnung

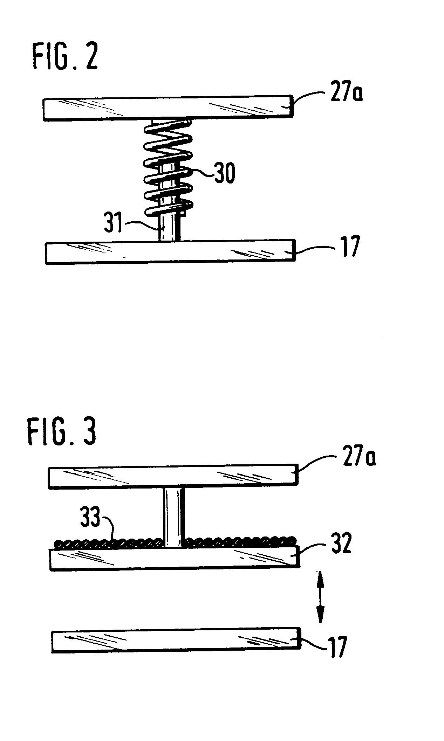

Ein Ausführungsbeispiel der Erfindung ist in der Zeichnung dargestellt und in der nachfolgenden Beschreibung näher erläutert. Es zeigen die Figur 1 eine Prüfeinrichtung in einer perspektivischen Darstellung und die Figuren 2 und 3 je eine Abwandlung des Abstandssensors.

### Beschreibung des Ausführungsbeispiels

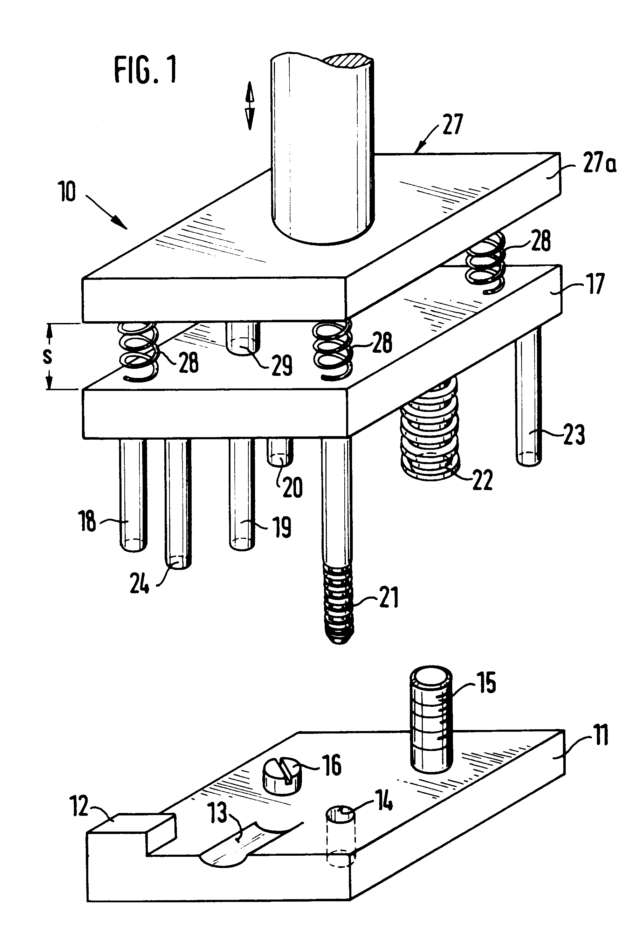

In der Figur 1 ist mit 10 eine Prüfeinrichtung bezeichnet, mit deren Hilfe ein Bauteil 11 auf seine Form überprüft werden kann. Das Bauteil 11 ist in der Zeichnung beispielsweise mit einem Absatz 12, einer Vertiefung 13, einer Bohrung 14, einem Schraubenbolzen 15 und einem Schraubenkopf 16 dargestellt. An einem Träger 17 sind mehrere, die obengenannten Bauformen des Bauteils 11 abtastende Sensoren 18, 19, 20 angeordnet. Die Bohrung 14 wird mit Hilfe einer Zylinderspule 21 vermessen, während der Schraubenbolzen 15 mittels einer Hohlzylinderspule 22 überprüft wird.

Zur Bestimmung der relativen Lage des Trägers 17 und des Bauteils 11 zueinander können direkt die Abstandssensoren 18, 19, 20 verwendet werden. Als Abstandssensoren können alle aus dem Stand der Technik bekannten Sensoren Anwendung finden. Hierzu eignen sich sowohl optische als auch elektromagnetische oder kapazitive Verfahren.

Die relative Lage des Trägers 17 zum Bauteil 11 kann aber auch durch einen oder mehrere mechanische Abstandshalter 23, 24 bestimmt werden, die zur Positionierung auf das Bauteil 11 aufgesetzt werden.

Der Träger 17 ist elastisch an einer Grundplatte 27a eines Stempels 27 mit Hilfe von Spiralfedern 28 aufgehängt, über den die Vorschubbewegung für die Prüfeinrichtung 10 einleitbar ist. Es sind aber auch Tellerfedern oder Biegefedern unterschiedlicher Gestalt oder auch gummiartige Distanzhalter verwendbar. Wichtig ist dabei, daß nach Entlastung des Stempels 27 sich der Stempel 27 und der Träger 17 wieder in ihre jeweilige Ausgangspositionen zurückbewegen. Ferner ist zwischen dem Träger 17 und der Grundplatte 27a ein Abstandssensor 29 angeordnet, mit dem der Abstand s und damit über die bekannten Federsteifigkeiten die Kraft zwischen dem Träger 17 und der Grundplatte 27a bestimmt werden. Statt eines Abstandssensors 29 kann auch ein Kraftsensor verwendet werden.

Zur Prüfung eines Bauteils 11 wird dieses unter die Prüfeinrichtung 10 geschoben, und der Stempel 27 wird in Richtung zum Bauteil 11 bewegt, bis über die Auswertung der Meßsignale der Abstandssensoren 18, 19 oder 20 die richtige Position erkannt wird, der Vorschub abgeschaltet wird und die Messung freigegeben wird. Werden zur richtigen Positionierung des Trägers 17 zum Bauteil 11 die mechanischen Abstandshalter 23, 24 auf das Bauteil 11 aufgesetzt, dann wird der Stempel 27 auf den Träger 17 zubewegt. Auch wenn ein Sensor des Trägers 17 das Bauteil 11 berührt, z.B. wenn die Bohrung 14 fehlen würde, d.h. sobald auf den Träger 17 eine Gegenkraft einwirkt, werden die Federn 28 zusammengedrückt. Der Abstandssensor 29 bestimmt den Abstand s und damit die Anpreßkraft. Bei einem vorgegebenen Mindestabstand $s_1$ wird der Vorschub abgeschaltet und auf den eigentlichen Meßbetrieb umgeschaltet. Bei einem exakt gefertigten Bauteil 11 werden die Zylinderspule 21 in die Bohrung 14 und die Hohlzylinderspule 22 um den Schraubenbolzen 15 bewegt, ohne daß dabei sowohl die Sensoren als auch das Bauteil beschädigt werden. Befindet sich das Bauteil 11 nicht in der richtigen Position, z.B. ist es verdreht, so wird der Vorschub der Prüfeinrichtung 10 über die Abstands- bzw. Kraftmessung beim Abstand $s_1$ abgeschaltet und der nachfolgende Meßvorgang meldet einen Fehler. Damit wird auch mit Sicherheit vermieden, daß Sensoren durch falsche Positionierung oder fehlerhafte Bauteile beschädigt werden können.

Statt eines Abstandssensors 29, der über die Federsteifigkeiten die Anpreßkraft erfaßt, kann auch direkt ein Kraftmesser zwischen der Grundplatte 27a und dem Träger 17 verwendet werden. Als Abstandssensoren können sowohl Potentiometer, Endschalter oder berührungsfrei arbeitende Sensoren verwendet werden. Besonders vorteilhaft eignen sich dafür nach dem Wirbelstromprinzip arbeitende Sensoren.

Der Abstandssensor 29 besteht dann aus einer von einem hochfrequenten Wechselstrom durchflossenen Spule 30, die an der Grundplatte 27a befestigt ist. In die Spule 30 ragt ein metallischer Tauchkern 31, der am Träger 17 angeordnet ist. Wird die Spule 30 von einem hochfrequenten Wechselstrom durchflossen, so entsteht an der Spule 30 ein magnetisches Wechselfeld. Dieses bewirkt auf der metallischen Oberfläche des Tauchkerns 31 Wirbelströme. Je größer dabei die vom Magnetfeld durchsetzte Fläche des Tauchkerns 31 ist, desto mehr Wirbelströme werden erzeugt. Ferner ist die Größe der erzeugten Wirbelströme abhängig vom verwendeten Material des Tauchkerns 31 sowie vom Abstand der Spule 30 zu den Oberflächen des Tauchkerns 31. Durch die erzeugten Wirbelströme wird der Spulen-Wechselstromwiderstand verringert, was eine Verkleinerung der an der Spule 30 anliegenden Spannung bewirkt. Die Veränderung der Spannung ist proportional zur Eintauchtiefe des Tauchkerns und somit proportional zum Abstand zwischen der Grundplatte 27a und des Trägers 17.

Ferner ist als Abstandssensor auch eine nach dem oben beschriebenen Wirbelstromverfahren arbeitende Flachspule verwendbar. Hierzu ist auf einem Träger 32, der an der Grundplatte 27a befestigt ist, eine Flachspule 33 angeordnet. Zur Erzielung eines Meßeffektes muß der Träger 17 dann aus metallischem Werkstoff bestehen oder eine metallische Oberfläche aufweisen, so daß sich in dieser Wirbelströme ausbilden können.

**Patentansprüche**

1. Prüfeinrichtung (10) zur Überwachung der Form von Bauteilen (11) mit Hilfe von an einem Träger (17) angeordneten, die Bauformen der Bau teile erfassenden Sensoren (18 - 22), wobei der Träger (17) so aus gebildet ist, daß er von einer Vorschubeinrichtung in Richtung der genannten Bauteile (11) bewegt wird, dadurch gekennzeichnet, daß die Prüfeinrichtung (10) eine elastisch am Träger (17) angeordnete Grundplatte (27, 27a) aufweist, und so ausgebildet ist, daß über die Grundplatte (27, 27a) die Vorschubbewegung auf den Träger (17) übertragen wird, und daß mit Hilfe eines oder mehrerer Sensoren (29) der Abstand oder die Kräfte zwischen dem Träger (17) und der Grundplatte (27, 27a) bestimmt werden, um ein Abschalten der Vorschubeinrichtung zu ermöglichen.

2. Prüfeinrichtung nach Anspruch 1, dadurch gekennzeichnet, daß der zwischen dem Träger (17) und der Grundplatte (27, 27a) angeordnete Sensor (29) ein Abstandsmesser ist.

3. Prüfeinrichtung nach Anspruch 1, dadurch gekennzeichnet, daß der zwischen dem Träger (17) und der Grundplatte (27, 27a) angeordnete Sensor (29) ein Kraftmesser ist.

4. Prüfeinrichtung nach einem der Ansprüche 1 bis 3, dadurch gekennzeichnet, daß der Träger (17) mit Hilfe von Federn an der Grundplatte (27, 27a) befestigt ist.

5. Prüfeinrichtung nach einem der Ansprüche 1 bis 4, dadurch gekennzeichnet, daß der Träger (17) und die Grundplatte (27, 27a) parallel zueinander angeordnet sind.

6. Prüfeinrichtung nach einem der Ansprüche 1, 2, 4, 5, dadurch gekennzeichnet, daß der zwischen dem Träger (17) und der Grundplatte (27, 27a) angeordnete Sensor (29) mindestens eine von einem hochfrequenten Wechselstrom durchflossene Spule aufweist, deren durch den Wirbelstromeffekt hervorgerufene Änderung der Induktivität der Spule eine Meßspannung in Abhängigkeit vom Abstand zwischen dem Träger (17) und der Grundplatte (27) erzeugt.

7. Prüfeinrichtung nach einem der Ansprüche 1 bis 5, dadurch gekennzeichnet, daß der zwischen dem Träger (17) und der Grundplatte (27, 27a) angeordnete Sensor (29) ein Potentiometer ist.

## Claims

1. Test device (10) for monitoring the shape of components (11) with the aid of sensors (18 - 22) which are arranged on a support (17) and detect the shapes of the components, the support (17) being constructed such that it is moved by a feed device in the direction of the said components (11), characterised in that the test device (10) has a baseplate (27, 27a) arranged elastically on the support (17) and is constructed such that the feed movement is transmitted via the baseplate (27, 27a) to the support (17), and in that the distance or the forces between the support (17) and the baseplate (27, 27a) are determined with the aid of one or more sensors (29) in order to permit the feed device to be switched off.

2. Test device according to Claim 1, characterised in that the sensor (29) arranged between the support (17) and the baseplate (27, 27a) is a distance gauge.

3. Test device according to Claim 1, characterised in that the sensor (29) arranged between the support (17) and the baseplate (27, 27a) is a force gauge.

4. Test device according to one of Claims 1 to 3, characterised in that the support (17) is attached to the baseplate (27, 27a) with the aid of springs.

5. Test device according to one of Claims 1 to 4, characterised in that the support (17) and the baseplate (27, 27a) are arranged parallel to one another.

6. Test device according to one of Claims 1, 2, 4, 5, characterised in that the sensor (29) arranged between the support (17) and the baseplate (27, 27a) has at least one coil through which a high-frequency AC current flows, whose change in inductance of the coil [sic], caused by the eddy current effect, generates a measurement voltage as a function of the distance between the support (17) and the baseplate (27).

7. Test device according to one of Claims 1 to 5, characterised in that the sensor (29) arranged between the support (17) and the baseplate (27, 27a) is a potentiometer.

## Revendications

1. Dispositif de vérification pour le contrôle de la forme d'éléments de construction (11) à l'aide de détecteurs (18, 22) disposés sur un support (17), détectant les formes de construction des éléments de construction, dans lequel le support (17) est constitué de telle façon qu'il est déplacé par un dispositif d'avancement ou de descente en direction des éléments de construction mentionnés (11), dispositif caractérisé en ce que le dispositif de vérification (10) présente une plaque de base (27, 27a) disposée élastiquement sur le support (17) et est constitué de telle façon que le mouvement d'avancement est transmis par la plaque de base (27, 27a) sur le support (17) et qu'à l'aide d'un ou plusieurs détecteurs (29) la distance ou les forces entre le support (17) et la plaque de base (27, 27a) sont déterminées pour permettre un débranchement du dispositif d'avancement.

2. Dispositif de vérification selon la revendication 1, caractérisé en ce que le détecteur (29) disposé entre le support (17) et la plaque de base (27, 27a) est un appareil pour mesurer la distance.

3. Dispositif de vérification selon la revendication 1, caractérisé en ce que le détecteur (29) disposé entre le support (17) et la plaque de base (27, 27a) est un dynamomètre.

4. Dispositif de vérification selon l'une des revendications 1 à 3, caractérisé en ce que le support (17) est fixé à l'aide de ressorts sur la plaque de base (27, 27a).

5. Dispositif de vérification selon l'une des revendications 1 à 4, caractérisé en ce que le support (17) et la plaque de base (27, 27a) sont disposés parallèlement l'un à l'autre.

6. Dispositif de vérification selon l'une des revendications 1, 2, 4, 5, caractérisé en ce que le détecteur (29) disposé entre le support (17) et la plaque de base (27, 27a) présente au moins une bobine parcourue par un courant alternatif à haute fréquence, dont la variation de l'inductance provoquée par l'effet de courants de Foucault produit une tension de mesure en fonction de la distance entre le support (17) et la plaque de base (27).

7. Dispositif de vérification selon l'une des revendications 1 à 5, caractérisé en ce que le détecteur (29) disposé entre le support (17) et la plaque de base (27, 27a) est un potentiomètre.

FIG. 1

FIG. 2

27a

30

31

17

FIG. 3

27a

33

32

17